**Europäisches Patentamt**

**European Patent Office**

**Office européen des brevets**

(19)

(11) Veröffentlichungsnummer : **0 385 928 B1**

(12) **EUROPÄISCHE PATENTSCHRIFT**

(45) Veröffentlichungstag der Patentschrift :
09.12.92 Patentblatt 92/50

(51) Int. Cl.⁵ : **B64F 1/32**

(21) Anmeldenummer : **90810091.0**

(22) Anmeldetag : **09.02.90**

(54) **Einrichtung zum Umladen von Flugzeug-Containern.**

(30) Priorität : **28.02.89 CH 726/89**

(43) Veröffentlichungstag der Anmeldung :
**05.09.90 Patentblatt 90/36**

(45) Bekanntmachung des Hinweises auf die
Patenterteilung :
**09.12.92 Patentblatt 92/50**

(84) Benannte Vertragsstaaten :
**AT BE CH DE DK ES FR GB GR IT LI LU NL SE**

(56) Entgegenhaltungen :
**EP-A- 0 171 366**
**WO-A-83/04007**

(73) Patentinhaber : **Gebrüder Frech AG**
**Gewerbestrasse 4**
**CH-4450 Sissach (CH)**

(72) Erfinder : **Riner, Felix**
**Sonnhalde 16**
**CH-5262 Frick (CH)**
Erfinder : **Stark, Karl-Heinz**
**Bertelweg 316**
**CH-4207 Himmelried (CH)**

(74) Vertreter : **Feldmann, Clarence Paul et al**
**c/o Patentanwaltsbüro FELDMANN AG**
**Postfach Kanalstrasse 17**
**CH-8152 Glattbrugg (CH)**

**Beschreibung**

Die vorliegende Erfindung betrifft eine Einrichtung zum Umladen von Flugzeug-Containern bestehend aus einem selbstfahrenden Transporter und einen Transportanhänger. Einrichtungen dieser Art sind bekannt und werden tausendfach auf vielen Flugplätzen eingesetzt.

Flugzeug-Container zirkulieren in einem ständigen Kreislauf. Hierbei erfolgen mehrere Umladefunktionen. Der erste Umladevorgang erfolgt vom Flugzeug auf eine bekannte Hebebühne. Diese wird abgesenkt, worauf der Container bei einem zweiten Umladevorgang von der Hebebühne auf einen sogenannten Transporter gelangt. Sowohl die fahrbare Hebebühne wie auch der selbstfahrende Transporter weisen hierfür Rollenbahnen auf, die jeweils in einer Ebene liegen und die Ladefläche bilden. Zwischen den Rollenbahnen sind Reibräder angeordnet, die leicht über das Niveau der Rollenbahnen hinausragen. Diese Reibrollen sind synchron-laufend angetrieben. Der selbstfahrende Transporter fährt mit dem übernommenen Flugzeug-Container zu einem der bereitstehenden Transportanhänger, die wiederum mit entsprechenden Rollenbahnen ausgerüstet sind. Vom Transporter wird der Container nun wieder mittels den getriebenen Reibrädern auf den Transportanhänger umgeladen. Ein ganzer Zug solcher Transportanhänger wird danach von einer Zugmaschine in das Flughafengebäude beziehungsweise Frachtgebäude gefahren. Ueblicherweise werden hier die Container entladen beziehungsweise beladen, ohne dass sie jedoch den Transportanhänger verlassen. Nach der Beladung erfolgen die beschriebenen Umladevorgänge in umgekehrter Reihenfolge. Auf einem Flugplatz sind meist nur wenige fahrbare Hebebühnen und selbstfahrende Transporter, jedoch eine Vielzahl von antriebslosen Transportanhängern im Einsatz. Während dem Umladevorgang der Container von der Hebebühne auf den Transporter bereits automatisiert gelöst ist, ist der Umladevorgang vom Transportanhänger auf die Transporter doch relativ problematisch und wird meist manuell vorgenommen.

Es ist eine Einrichtung wie eingangs beschrieben bekannt, bei der an der Umladekante des Transporters Reibräder vorgesehen sind, die während des Umladevorganges auf Reibräder am Transportanhänger drücken und diese treiben. Weitere Reibräder am Transportanhänger sind über Transmissionen mit den erstgenannten in Wirkverbindung. Diese Lösung ist nach wie vor kostenaufwendig und erfahrungsgemäss reparaturanfällig.

Es ist folglich die Aufgabe der vorliegenden Erfindung eine Einrichtung zum Umladen von Flugzeug-Container zu schaffen mit der, der Umlad eines Flugzeug-Containers auch von einem Transportanhänger auf den Transporter mechanisiert werden kann.

Diese Aufgabe löst eine Einrichtung mit den Merkmalen des Patentanspruches 1.

In der anliegenden Zeichnung sind verschiedene Ausführungen der erfindungsgemässen Einrichtung dargestellt und anhand der nachfolgenden Beschreibung erläutert. Es zeigt:

Figur 1 eine perspektivische Teilansicht der Einrichtung, nämlich das umladeseitige Ende des Transporters die Rollenbahnen des Transportanhängers und andeutungsweise einen Container;

Figur 2 einen Auslösemechanismus für die in der Zunge integriert angeordnete Greifvorrichtung;

Figur 3 eine Variante des Auslösemechanismus gemäss der Figur 2;

Figur 4 eine Gesamtansicht der Einrichtung von der Seite und

Figur 5 eine schematisierte Darstellung der gesamten Einrichtung in der Aufsicht.

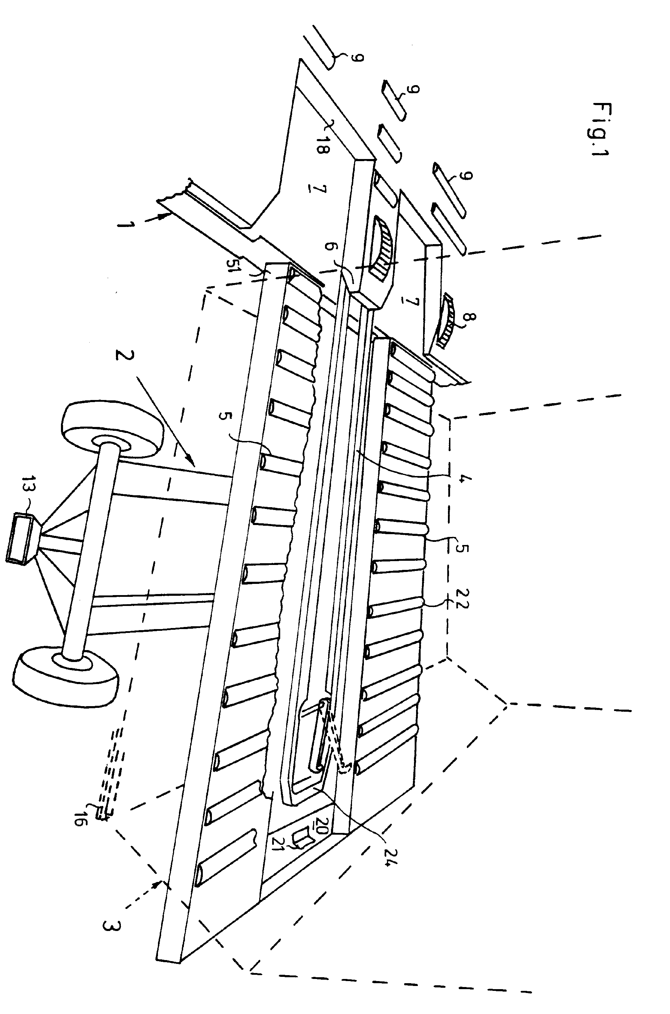

Die Figur 1 zeigt die wesentlichen Merkmale der erfindungsgemässen Einrichtung zum Umladen der Flugzeug-Container. Sie umfasst einerseits einen selbstfahrenden Transporter 1, von dem hier nur das umladeseitige Ende dargestellt ist sowie einen Transportanhänger 2. Weiter ist auch ein Flugzeug-Container 3 angedeutet, welcher hier auf den zum Transportanhänger 2 gehörigen Rollenbahnen 5 ruht.

Der Transporter 1 hat eine Ladefläche, die durch mehrere Rollenbahnen 9 gebildet ist. Für den Umlad eines Flugzeug-Containers eines Transportanhängers 2 auf den Transporter 1 weist dieser an seinem umladeseitigen Ende eine horizontale ein- und ausfahrbare Zunge 4 auf. Diese kann den Container 3, auf dem zu entladenden Transportanhänger 2 unterfahren. Umladeseitig weist der Transportanhänger eine Zungenmündung 6 auf, in der die Zunge 4 im eingefahrenen Zustand hineinläuft. Beiseits der Zungenmündung 6 ist je eine Ausnehmung 7 vorhanden, in welche die Enden 51 der Rollenbahnen 5 des Transportanhängers 2 hineinpassen. Ueber die Ladefläche des Transporters 1 verteilt sind mehrere Friktionsrollen 8 angeordnet, welche das Niveau der Rollen der Rollenbahnen 9 leicht überragen. Diese Friktionsrollen 8 können Vollgummi oder Luftreifen sein, sind motorisch antreibbar und dienen zum Verschieben der Container auf dem Transporter 1. Die, am Transporter 1, umladeseitig ein- und ausfahrbare Zunge 4 ist hier durch einen in Draufsicht U-förmigen Rahmen gebildet. Die Zungenspitze ist als U-Bogen gebildet und mit einer Greifvorrichtung ausgerüstet. Diese Greifvorrichtung besteht hier aus zwei miteinander verbundenen, schwenkbeweglichen Greifhebeln 10 mit hakenförmigen Enden 11. Die Schwenkachse der Greifvorrichtung verläuft parallel zur Zungenebene und senkrecht zur Bewegungsrichtung der Zunge 4. Im eingeschwenkten Zustand der Greifhebel 10 sind diese so in den U-förmigen Rahmen der Zunge eingeschwenkt, dass ihre hakenförmigen Enden 11 die Oberseite des Rahmens nicht überragen. Die bei den untereinander starr verbundenen Greifhebel 10 sind ausserdem mittels mindestens einer Torsionsfeder belastet, so dass die Federkraft sie stets nach oben drückt. Weisen die Greifhebel 10 während des Einfahrens der Zunge 4 nach oben, so werden sie bei der Zungenmündung 6 von deren Oberkante nach unten geschwenkt. In der eingeschwenkten Lage rasten die Greifhebel 10 am Zungenrahmen ein. Hierzu können bekannte federbelastete Schnappmechanismen verwendet werden. In der Zeichnung sind die beiden Greifhebel 10 mit der jochartigen Verbindung gesamthaft in der unteren Stellung dargestellt, während die aufgestellte Lage eines Greifhebels durch unterbrochene Linien dargestellt ist.

Der Transportanhänger 2 hat eine Anhängervorrichtung 13 und weist zwei Rollenbahnen 5 auf, die mittels einer auf Chassis des Transportanhängers montierten Drehscheibe 15 in der Horizontalebene beziehungsweise um die Hochachse des Transportanhängers, drehbar sind. Die beiden Rollenbahnen 5 sind in Abstand voneinander angeordnet, so dass eine Ausnehmung zur Aufnahme der ausfahrbaren Zunge 4 des Transporters 1 gebildet ist, wenn sich jener zum Transportanhänger in Umladeposition befindet, wobei und die Rollenbahnen 5 des Transportanhängers auf die Bewegungsrichtung der Zunge 4 ausgerichtet sind. Zum Fahren der Zugkomposition werden die Rollenbahnen 5 des Transportanhängers in deren Fahrtrichtung geschwenkt um eine Ueberbreite zu vermeiden.

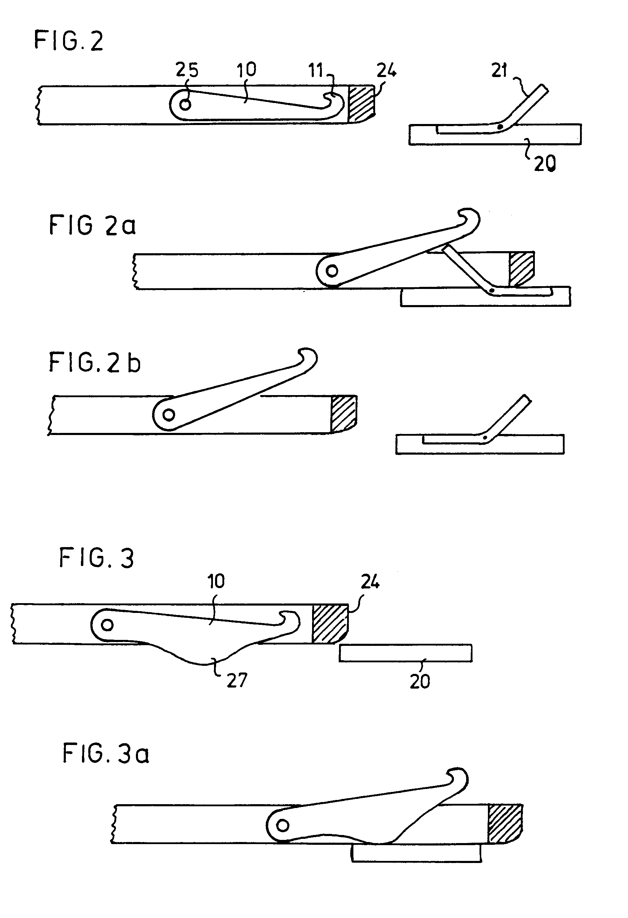

Die beiden Rollenbahnen 5 des Transportanhängers sind mindestens in ihrem Endbereich durch eine Stahlplatte 20 verbunden, deren Oberseite unterhalb des Niveaus der Unterseite der Zunge 4 liegt. In der Stahlplatte 20 ist eine Wippe 21 eingebaut, die um eine zur Schwenkachse der Greifhebel 10 parallelen Achse schwenkbar ist. Die Wippe 21 besteht aus einer abgewinkelten Stahlplatte (siehe Figuren 2 & 3).

Im folgenden soll nun anhand der Figur 1 der Umlad eines Flugzeug-Containers vom Transporter 1 auf den Transportanhänger 2 und umgekehrt in chronologischer Reihenfolge beschrieben werden. Der andeutungsweise eingezeichnete Container 3 liegt auf der Ladefläche des Transporters 1 auf. Die Vorderseite der umlaufenden Kante 16 des Containers 3 befindet sich dann in der Figur 1 rechts der Friktionsrollen 8. Die Zunge 4 des Transporters 1 ist noch eingefahren. Der Fahrer des Transporters 1 fährt diesen an den bereitstehenden Transportanhänger 2 heran, so dass sich die Rollenbahnen-Enden 51 der Rollenbahnen 5 des Transportanhängers 2 in die Ausnehmungen 7 einschieben bis die Vorderkante des Transporters 1 am Transportanhänger 2 ansteht. Nun wird die Zunge 4 aus ihrer Mündung 6 ausgefahren. Sie unterfährt dabei den Container 3, welcher sich noch auf dem Transportanhänger 2 befindet. Die Zungenspitze gleitet dabei über die Stahlplatte 20 und betätigt, die darin schwenkbar angeordnete Wippe 21. Jene drückt durch ihre Schwenkung mit ihrem einen Ende von unten auf die verbundenen Greifhebel 10, so dass diese aus ihrer Einrastung geschoben werden. Folglich schwenken die Greifhebel 10 infolge, der auf sie wirkende Torsionsfeder hoch, bis sie den Flugzeug-Container 3 mit ihren Haken hintergreifen. Die Zunge 4 wird nun eingefahren und der Container vom Transportanhänger 2 auf den Transporter 1 gezogen. Die Haken 11 der Greifhebel 10 hängen dabei an der Kante 16 ein. Diese umlaufende Abschlusskante hat eine genormte Form und dient auch zur Befestigung des Containers im Frachtraum des Flugzeuges, wo spezielle Klauen die Kante 16 umgreifen. Ist der Container ein gewisses Stück weit auf den Transporter 1 hinaufgezogen, so übernehmen die Friktionsrollen 8 des Transporters 1 die weitere Förderung bis zur gewünschten Position. Durch das Einfahren der Zungenspitze in die Mündung 6 werden auch die Greifhebel 10 wieder eingeschwenkt und rasten, in der schon beschriebenen Weise ein.

Zum Entladen des Transporters 1 werden nun seine Friktionsrollen 8 in Betrieb gesetzt. Der Flugzeug-Container 3 rollt sodann auf diesen Friktionsrollen 8 nach rechts und wird auf die freilaufenden Rollen 22 der Rollenbahnen 5 des Anhängers 2 aufgeschoben. In der erforderlichen Position auf dem Transportanhänger 1 wird der Container 3 mittels einer nicht dargestellten Haltevorrichtung gesichert. Die Zunge 4 ist dabei in eingefahrener Lage.

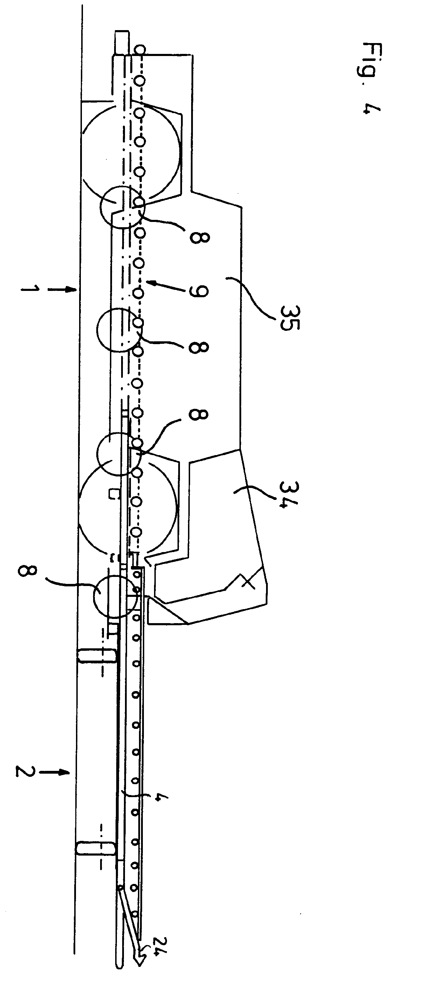

Anhand der Figur 3 und 4 wird die Funktion, der in der Stahlplatte 20 angeordneten Wippe 21, im einzelnen erläutert. Gezeigt ist die Zungenspitze 24, welche hier die Form eines Bügels (mit den zwei Greifhebeln 10) umfasst Greifvorrichtung. In der schematischen Darstellung erkennt man, wie sich die Zungenspitze 24 auf die Stahlplatte 20 schiebt und die Wippe 21 betätigt. Der vordere Querstab 24 der rahmenförmigen Zunge 4, wird somit zuerst an die Wippe 21 anstossen und diese umkippen (Figur 2a). Beim Umkippen drückt das andere Ende der Wippe 21 die Greifhebel 10 aus den nicht dargestellten Schnapparretierungen und die Greifhebel 10 schwenken Kraft der (ebenfalls nicht dargestellten) Torsionsfeder nach oben (Figur 2a). Nun wird die Zunge 4 wieder eingezogen und nimmt den Container mit. Die die Verbindung 24 darstellende Zungenspitze der rahmenförmigen Zunge 4 gleitet wiederum über die Wippe 21 und legt sie wieder in die ursprüngliche Lage zurück (Figur 2b).

Eine andere Variante eines solchen Auslösemechanismuses zeigt Figur 3. Hier sind die Greifhebel 10 mit einer am unteren Rand angebrachten Führungskurve 27 versehen, die von der Stahlplatte 20 abgetastet wird und die Greifhebel 10 im Endbereich der vollständig ausgefahrenen Zunge 4 nach oben schieben und dabei die Arretierung ausrasten (Figur 3a). Die Rückführung der Greifhebel 10 in der unteren eingerasteten Position erfolgt wie vorher beim Einfahren der Zunge 4 in die Zungenmündung 6.

Eine andere Variante eines solchen Auslösemechanismuses zeigt Fgiur 3. Der Greifhebel 10 bildet hier mit seinem unteren Rand eine Führungskurve 27. Sobald der Greifhebel 10 auf die Stahlplatte 20 aufläuft, wird er entsprechend hoch geschwenkt und aus seiner Einrastung gelöst. Natürlich sind auch noch weitere, in ähnlicher Weise, arbeitende Auslösemechanismen denkbar.

Figur 4 zeigt den Transporter 1 und den Transportanhänger 2 in Umladekonfiguration in einem Längsschnitt. Der Transporter 1 ist selbstfahrend und weist seitlich der Ladefläche ein Führerstand 34 und einem Karrosserieteil 35 auf, in welchem das Antriebaggregat, in der Regel ein Dieselmotor, untergebracht ist. Deutlich erkennbar sind die Rollenbahnen 9 auf dem Transporter 1 sowie die Friktionsrollen 8, welche die Rollen der Rollenbahnen 9 in der Höhe leicht überragen. In der gezeigten Darstellung ist die Zunge 4 des Transporters ausgefahren und dessen Greifvorrichtung ist nach oben geschwenkt und im nächsten Augenblick im Begriff an der Kante 16 des andeutungsweise gezeichneten Flugzeug-Containers anzugreifen. Wie in dieser Figur erkennbar ist, stehen die Fahrtrichtungen von Transporter 1 und Transportanhänger 2 senkrecht zueinander.

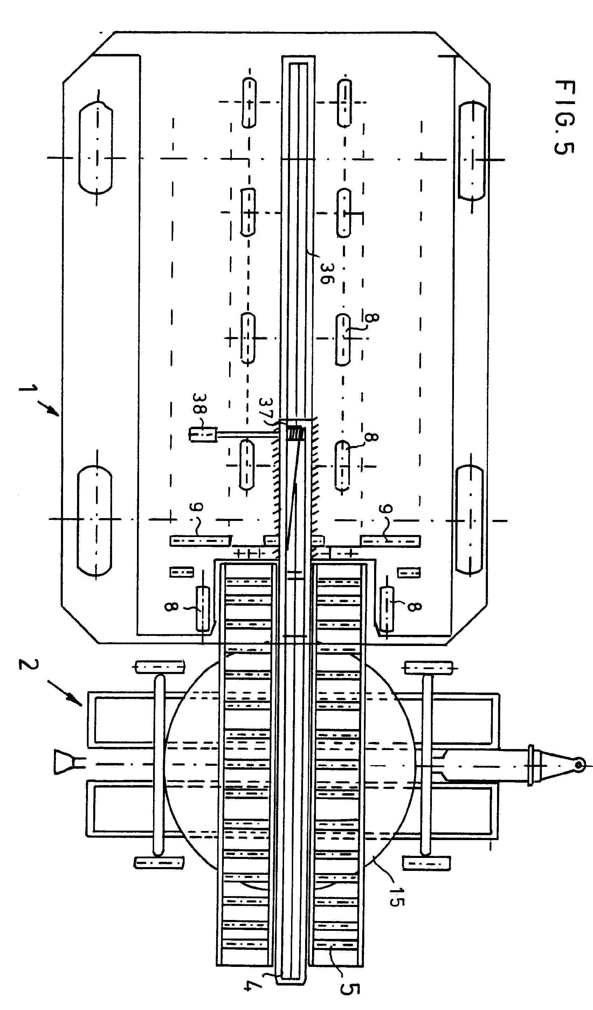

Figur 5 schliesslich zeigt der Transporter und Transportanhänger in der Situation nach Figur 4 im Grundriss. Wiederum sind die Friktionsrollen 8 am Transporter 1 angedeutet. Ausserdem ist der Führungskanal 36 zur Aufnahme und zum Ein- und Ausfahren der Zunge 4 dargestellt, der Einfachheit halber mit durchgezogenen Linien, obwohl weder der Führungskanal 36 noch die eingefahrene Zunge 4 am Transporter 1 von oben unbedingt einsehbar sein muss. Zum Schutz gegen Verschmutzung wird man diesen eher geschlossen konstruieren. Die Zunge 4 wird hier von einem doppelten Seilspill 37 angetrieben. So dient ein Seil für das Ein-, das andere für das Ausfahren der Zunge 4, wobei beide Seile auf der gleichen Trommel aufgewickelt werden, die zum Beispiel von einem Elektromotor 38 antreibbar ist. Die Zeichnung zeigt die Zunge 4 hier so wohl in ganz eingefahrenem wie auch in ganz ausgefahrenem Zustand.

**Patentansprüche**

1. Einrichtung zum Umladen von Flugzeug-Containern (3) bestehend aus einem selbstfahrenden Transporter (1) und einem Transportanhänger (2) die beide Rollenbahnen (5) aufweisen, die Teil der jeweilig auf gleicher Höhe liegenden Ladeflächen sind, und wobei der Transporter (1) mit getriebenem Friktionsrollen (8) ausgestaltet ist, die geringfügig über den Rollen der Rollenbahnen hinausragen, und dass die Ladefläche des Transportanhängers mit den Rollenbahnen auf dessen Chassis mittels einer Drehscheibe schwenkbar gelagert ist, dadurch gekennzeichnet, dass der Transporter (1) mit einer unterhalb der Ladefläche angeordneten ein- und ausfahrbaren Zunge (4) ausgerüstet ist, die in Umladeposition des Transportanhängers zwischen dessen Rollenbahnen vorschiebbar und rückziehbar ist und eine Greifvorrichtung aufweist, die den zu fördernden Flugzeug-Container form- und/oder kraftschlüssig während der Förderung hält.

2. Einrichtung nach Anspruch 1, dadurch gekennzeichnet, dass die Zunge (4) als U-förmigen, parallel zur Ladefläche verlaufenden Rahmen gestaltet ist, an dessen geschlossenen Ende die Greifvorrichtung (10,11) angeordnet ist.

3. Einrichtung nach Anspruch 1, dadurch gekennzeichnet, dass der Transporter (1) umladeseitig beidseitig der Zunge (4) je eine Ausnehmung (7) aufweist, die in der Umladekonfiguration zur Aufnahme der Endteile (17) der Rollenbahnen (5) des Transportanhängers (2) bestimmt sind.

4. Einrichtung nach Anspruch 1, dadurch gekennzeichnet, dass die Zunge (4) mittels eines Antriebsmittels um mindestens annähernd der Länge der Ladefläche des Transportanhängers ein- und ausfahrbar ist.

5. Einrichtung nach Anspruch 4, dadurch gekennzeichnet, dass das Antriebsmittel ein doppeltes Seilspill (37) ist.

6. Einrichtung nach Anspruch 1, dadurch gekennzeichnet, dass die Greifvorrichtung aus mindestens einem schwenkbeweglichen, in einer Richtung federbelasteten Greifhebel (10) mit hakenförmigen Ende (11) besteht, dessen Schwenkachse parallel zur Zungenebene und senkrecht zur Bewegungsrichtung der Zunge (4) verläuft und in der zurückgeschwenkten Lage unter der Zungenoberfläche liegt.

7. Einrichtung nach den Ansprüchen 2 und 6, dadurch gekennzeichnet, dass am Transporter (1) eine zulaufende Zungenmündung (6) vorhanden ist, in der der oder die Greifhebel der Greifvorrichtung beim Einlaufen der Zunge (4) von einer Mitnehmerlage in die untere Position gedrückt wird, und dass am U-förmigen Rahmen der Zunge sowie an der oder die Greifhebel (10) der Greifvorrichtung an sich bekannte Schnappmechanismen vorgesehen sind, so dass der oder die Greifhebel (10) in der unteren Position gegen den Druck der Feder einrasten.

8. Einrichtung nach Anspruch 6, dadurch gekennzeichnet, dass der oder die Greifhebel (10) eine am unteren Hebelarm bogenförmige Auflaufkurve aufweist beziehungsweise aufweisen, und dass am Transportanhänger (2) eine Stahlplatte (20) angeordnet ist, auf die die oder der Greifhebel (10) mit ihrer Auflaufkurve beim Ausfahren der Zunge (4) auflaufen und aus dem Schnappmechanismus ausrasten.

9. Einrichtung nach Anspruch 7, dadurch gekennzeichnet, dass am Transportanhänger eine Stahlplatte (20) angeordnet ist über die, die Zunge (4) beim Ausfahren darüber weg läuft, wobei in der Platte (20) im Bereich der von der Zunge (4) überstrichen wird eine Wippe (21) gelenkig angebracht ist, die als Auslösemechanismus für der oder die eingerasteten Greifhebel (10) dient.

## Claims

1. Apparatus for unloading aircraft containers (3) comprising an automotive transporter (1) and a transport trailer (2) having two roller trains (5), which are part of loading surfaces which are in each case at the same height and in which the transporter (1) has driven friction rollers (8), which project slightly over the rollers of the roller trains, and that the loading surface of the transport trailer with the roller trains is pivotably mounted on the chassis by means of a turntable, characterized in that the transporter (1) is equipped with an extendable and retractable tongue (4) located below the loading surface and which can be advanced and withdrawn between the roller trains when the trailer is in the unloading position and has a gripping means, which, during conveying, secures in an unterlocking and/or frictional manner the aircraft containers to be conveyed.

2. Apparatus according to claim 1, characterized in that the tongue (4) is constructed as a U-shaped frame running parallel to the loading surface and on whose closed end is located the gripping means (10, 11).

3. Apparatus according to claim 1, characterized in that on the unloading side the transporter (1) has on the two sides of the tongue (4) in each case a recess (7), which in the unloading configuration serves to receive the end part (17) of the roller trains (5) of the transport trailer (2).

4. Apparatus according to claim 1, characterized in that the tongue (4) can be extended and retracted by a drive means by at least approximately the length of the trailer loading surface.

5. Apparatus according to claim 4, characterized in that the drive means is a double cable winch (37).

6. Apparatus according to claim 1, characterized in that the gripping means comprises at least one pivotable gripping lever (10), which is spring-loaded in one direction and having a hook-like end (11), whose pivot pin is parallel to the tongue plane and at right angles to the movement direction of the tongue (4) and which is located below the tongue surface in the pivoted back position.

7. Apparatus according to claims 2 and 6, characterized in that on the transporter (1) is provided an entering tongue mouth (6), in which the gripping lever or levers of the gripping means on the entry of the tongue (4) is pressed from a driving position into the lower position and that on the U-shaped frame of the tongue, as well as on the gripping lever or levers (10) of the gripping means are provided per se known snap mechanisms, so that the gripping lever or levers (10) engage in the lower position in opposition to spring tension.

8. Apparatus according to claim 6, characterized in that the gripping lever or levers (10) have an arcuate run-up curve on the lower lever arm and that on the transport trailer (2) is provided a steel plate (20), onto which run the gripping lever or levers (10) with the run-up curve thereof during the extension of the tongue (4) and are disengaged from the snap mechanism.

9. Apparatus according to claim 7, characterized in that a steel plate (20) is located on the transport trailer and over which runs the tongue (4) on extension and in the plate (20) in the area covered by the tongue (4) is fitted in an articulated manner a rocker (21), which serves as the release mechanism for the engaged gripping lever or levers (10).

## Revendications

1. Dispositif pour décharger des conteneurs d'avion (3), constitué par un transporteur automoteur (1) et par une remorque transporteuse (2) qui comportent tous deux des convoyeurs à rouleaux (5), ceux-ci formant une partie des surfaces de chargement situées à chaque fois à la même hauteur, cependant que le transporteur (1) est équipé de galets de friction entraînés (8) qui font légèrement saillie au-dessus des rouleaux des convoyeurs à rouleaux, et que la surface de chargement de la remorque transporteuse, avec les convoyeurs à rouleaux, est montée pivotante sur son châssis au moyen d'une plaque tournante, caractérisé par le fait que le transporteur (1) est équipé d'un bras (4) que l'on peut faire entrer et sortir, qui est disposé au-dessous de la surface de chargement, qui, dans la position de déchargement de la remorque transporteuse, peut être avancé et rétracté entre les convoyeurs à rouleaux de celle-ci, et qui comporte un dispositif de préhension, lequel tient, par conjugaison des formes et/ou des forces pendant le déplacement, le conteneur d'avion qui doit être déplacé.

2. Dispositif selon la revendication 1, caractérisé par le fait que le bras (4) est réalisé sous la forme d'un cadre en forme de U qui s'étend parallèlement à la surface de chargement et à l'extrémité fermée duquel est disposé le dispositif de préhension (10, 11).

3. Dispositif selon la revendication 1, caractérisé par le fait que le transporteur (1) comporte à chaque fois, du côté du déchargement, et des deux côtés du bras (4), un évidement (7) qui est destiné à recevoir, dans la configuration de déchargement, les parties d'extrémité (17) des convoyeurs à rouleaux (5) de la remorque transporteuse (2).

4. Dispositif selon la revendication 1, caractérisé par le fait que le bras (4) peut être sorti et rentré à l'aide d'un moyen d'entraînement sur une longueur au moins égale, approximativement, à celle de la surface de chargement de la remorque transporteuse.

5. Dispositif selon la revendication 4, caractérisé par le fait que le moyen d'entraînement est un cabestan à deux câbles (37).

6. Dispositif selon la revendication 1, caractérisé par le fait que le dispositif de préhension se compose d'au moins un levier de préhension (10) qui est mobile en pivotement, qui est poussé dans une direction par un ressort, dont l'extrémité (11) est en forme de crochet, dont l'axe de pivotement s'étend parallèlement au plan du bras et perpendiculairement à la direction de déplacement du bras (4), et qui est situé au-dessous de la surface du bras dans la position où il revient par pivotement.

7. Dispositif selon les revendications 2 et 6, caractérisé par la présence sur le transporteur (1) d'une embouchure (6) terminée en pointe et destinée au bras, dans laquelle le ou les leviers de préhension du dispositif de préhension sont poussés depuis une position d'entraînement jusque dans la position inférieure, lors de l'entrée du bras (4), et par le fait que des mécanismes d'encliquetage connus en eux-mêmes sont prévus sur le cadre en forme de U du bras, ainsi que sur le ou les leviers de préhension (10) du dispositif de préhension, de sorte que le ou les leviers de préhension (10) s'encliquettent dans la position inférieure à l'encontre de la pression du ressort.

8. Dispositif selon la revendication 6, caractérisé par le fait que le ou les leviers de préhension (10) présente ou, respectivement, présentent une rampe d'accès en forme d'arc sur le bras inférieur du levier, et par le fait qu'est disposée sur la remorque transporteuse (2) une plaque en acier (20) sur laquelle le ou les leviers de préhension (10) arrivent par leur rampe d'accès lors de la sortie du bras (4), en s'échappant du mécanisme d'encliquetage.

9. Dispositif selon la revendication 7, caractérisé par le fait qu'est disposée sur la remorque transporteuse une plaque en acier (20) sur laquelle le bras (4) se déplace en s'éloignant lors de sa sortie, et par le fait qu'est montée de manière articulée dans la plaque (20), dans la région balayée par le bras (4), une bascule (21) qui sert de mécanisme de déclenchement pour le ou les leviers de préhension encliquetés (10).

Fig.1

FIG. 2

FIG 2a

FIG. 2 b

FIG. 3

FIG. 3a

Fig. 4

FIG.5